Europäisches Patentamt

European Patent Office

Office européen des brevets

(19)

(11) **EP 1 403 801 A1**

(12) **EUROPEAN PATENT APPLICATION**

(43) Date of publication:
**31.03.2004 Bulletin 2004/14**

(51) Int Cl.7: **G06F 17/60**

(21) Application number: **03021164.3**

(22) Date of filing: **23.09.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **26.09.2002 JP 2002280222**

(71) Applicant: **Mitsubishi Jidosha Kogyo Kabushiki
Kaisha
Tokyo 108-8410 (JP)**

(72) Inventor: **Tsuji, Noboru
Minato-ku Tokyo (JP)**

(74) Representative: **VOSSIUS & PARTNER
Siebertstrasse 4
81675 München (DE)**

(54) **Inventory control method**

(57)    An inventory control method determines a standard deviation ($\sigma$) based on the difference between an actual received order quantity ($\times$) in each unit period and an average received order quantity ($\mu$), and controls a stock quantity by use of a safety stock quantity based on the standard deviation. In the inventory control method, the standard deviation is determined using the value of the difference between the actual received order quantity and the average received order quantity only when the actual received order quantity exceeds the average received order quantity. That is, the standard deviation is determined with the exclusion of variations due to differences obtained when the actual received order quantity falls short of the average received order quantity. Since the safety stock quantity is controlled based on the so determined standard deviation, the total stock quantity is appropriately decreased to avoid an excessive safety stock quantity.

# F I G. 1

Correction to Received Order
Quantities Fluctuating Irregularly

(Q)

AVE

Exclusion of Determinant
Making Maximum Stock
Quantity Excessively Large

(t)

**Description**

This invention relates to an inventory control method for controlling the inventory of component parts of automobiles and accessory parts of automobiles when orders for these parts are received.

Car dealers and repair shops have an inventory of component parts and accessory parts of automobiles, and deal with parts replacement at the time of repairing and inspection. The component parts and accessory parts of automobiles are available in wide varieties, and vary widely in the frequency of use. Thus, the dealers and repair shops keep a stock of consumables and specific parts used with a high frequency.

A depository or the like for storage of inventories is subject to constraints, and thus is intended to keep in stock a minimum required number of parts.

In keeping such a stock, it is considered preferred that no stock exhaustion occurs and there is no surplus stock. A forecast of demand for automobile component parts and accessory parts is difficult, and their order quantities fluctuate irregularly. Thus, inventory control based on past figures is impossible.

As a solution to this problem, an inventory control method has been known (for example, Japanese Unexamined Patent Publication No.1994-56223) which uses the standard deviation of the received order quantities in the past, and adds a safety stock quantity based on the standard deviation to the average of received order quantities actually achieved or a predicted received order quantity, thereby determining a minimum stock quantity which is expected to cause no stock exhaustion.

By so exercising inventory control with the use of the standard deviation, it becomes possible to absorb irregular fluctuations in the received order quantity, thereby maintaining an appropriate inventory enough to cause no stock exhaustion.

The standard deviation is determined by the difference between the actual received order quantity in each unit period and the average received order quantity and a population parameter based on the number of the unit periods. That is, the standard deviation shows the degree to which certain values vary in a positive direction or a negative direction with respect to the average value as a reference.

Thus, the standard deviation includes the degree of variations in the negative direction. If it is attempted to maintain an appropriate inventory enough to cause no stock exhaustion, the outcome is that an excessive value is obtained as an appropriate stock quantity.

The present invention has been accomplished in the light of the above-mentioned circumstances. It is the object of the invention to provide an inventory control method which can maintain an appropriate stock enough to cause no stock exhaustion, even when using a standard deviation.

This object can be achieved by the features defined in the claims.

The inventory control method of the present invention, as a first aspect for attaining the above object, is an inventory control method which determines a standard deviation based on a difference between an actual received order quantity in each unit period and an average received order quantity, and controls a stock quantity by use of a safety stock quantity based on the standard deviation, wherein

the standard deviation is determined using a value of the difference between the actual received order . quantity and the average received order quantity only when the actual received order quantity exceeds the average received order quantity.

Thus, the standard deviation can be determined with the exclusion of variations due to differences obtained when the actual received order quantity falls short of the average received order quantity. Consequently, an inventory control method can be realized which can maintain a minimum appropriate stock enough to cause no stock exhaustion even when a standard deviation is used.

The inventory control method of the invention, as a second aspect, is the inventory control method according to the first aspect, wherein the standard deviation is determined using the average received order quantity calculated only from the actual received order quantities taking positive values. Thus, effective inventory control can be exercised for intermittent receiving of orders.

The inventory control method of the invention, as a third aspect, is the inventory control method according to the first aspect, wherein the standard deviation is determined using the average received order quantity calculated only from the actual received order quantities taking positive values, and also using only the unit' periods, when the actual received order quantities take positive values, as a population parameter. Thus, effective inventory control can be exercised for intermittent receiving of orders.

The inventory control method of the invention, as a fourth aspect, is the inventory control method according to the first aspect, wherein a number of the unit periods to be targeted is itself used as a population parameterfordeterminingthestandard deviation. Thus, it becomes possible to exercise effective inventory control while keeping a safety stock quantity smaller and minimizing wastage.

The inventory control method of the invention, as a fifth aspect, is an inventory control method which determines a standard deviation based on a difference between an actual received order quantity in each unit period and an average received order quantity, and controls a stock quantity by use of a safety stock quantity based on the standard deviation, wherein

the standard deviation is determined
using a value of the difference between the actual received order quantity and the average received order quantity only when the actual received order quantity exceeds the average received order quantity,

using the average received order quantity calculated only from the actual received order quantities taking positive values,

using only the unit periods, when the actual received order quantities take positive values, as a population parameter, and

using a number of the unit periods, to be targeted, itself as the population parameter.

Thus, the standard deviation can be determined with the exclusion of variations due to differences obtained when the actual received order quantity falls short of the average received order quantity. Also, it becomespossibletoexerciseeffectiveinventorycontrol for intermittent receiving of orders, while keeping a safety stock quantity smaller and minimizing wastage. Consequently, an inventory control method can be realized which can maintain a minimum appropriate stock enough to cause no stock exhaustion even when a standard deviation is used.

The inventory control method of the invention, as a sixth aspect, is the inventory control method according to any one of the first to fifth aspects, wherein an article to be ordered is a component part of an automobile or an accessory part of an automobile. Thus, effective stock control can be exercised for component parts of automobiles and accessory parts of automobiles.

The present invention will become more fully understood from the detailed description given hereinbelow and the accompanying drawings which are given by way of illustration only, and thus are not limitative of the present invention, and wherein:

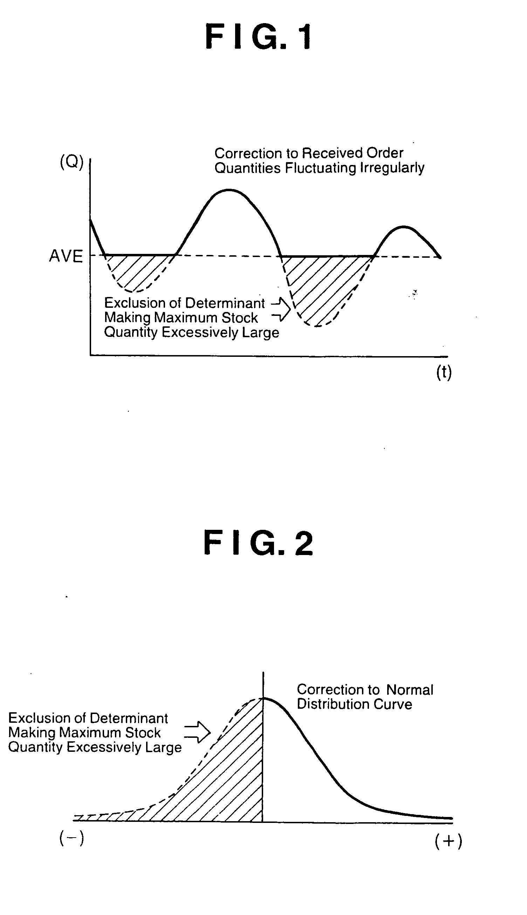

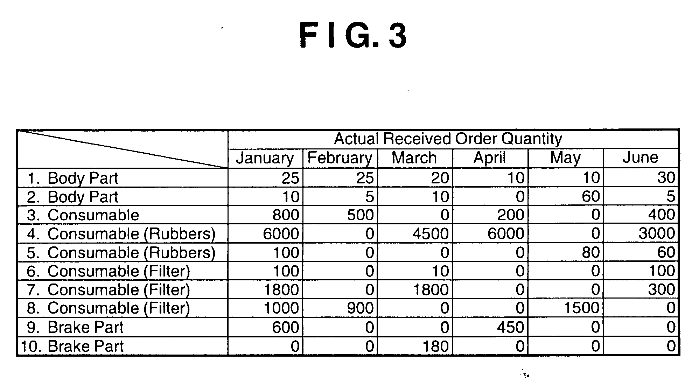

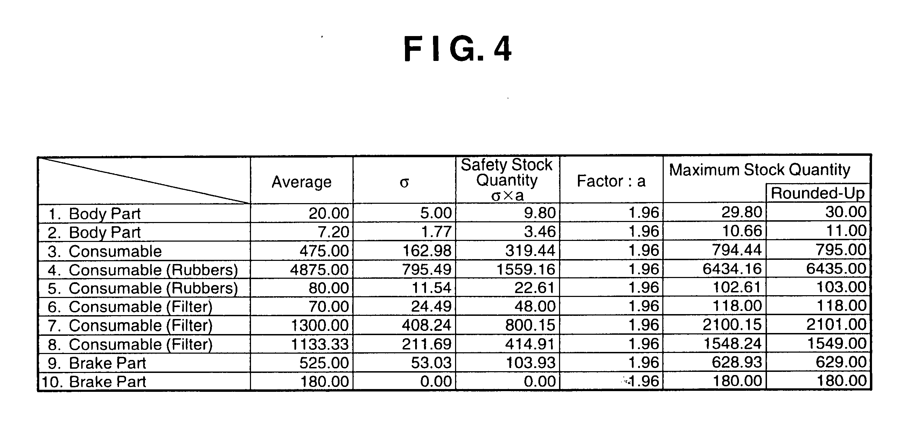

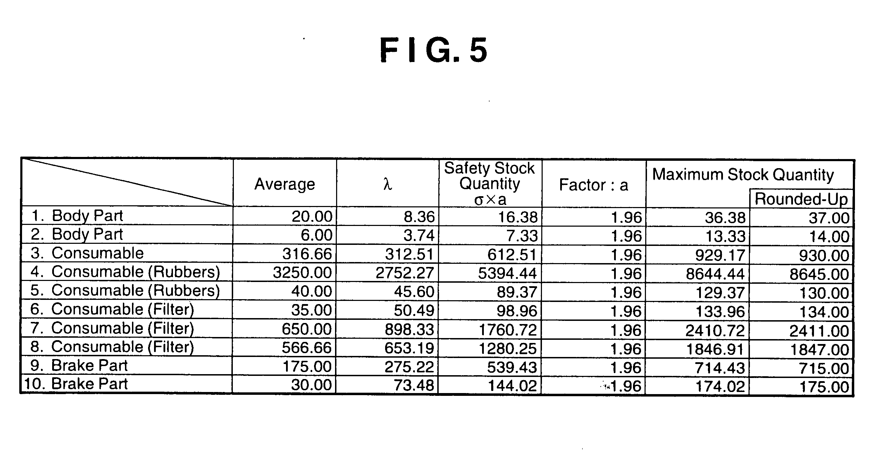

FIG. 1 is a conceptual view showing the status of correction to received order quantities fluctuating irregularly; FIG. 2 is a conceptual view showing the status of correction to a normal distribution curve; FIG. 3 is a tabular view showing actual received order quantities, for example, in 6 months for 10 types of parts (Part 1 to Part 10); FIG. 4 is a tabular view showing standard deviations σ, safety stock quantities and maximum stock quantities of the respective parts according to the method of the embodiment of the present invention; and FIG. 5 is a tabular form showing standard deviations (λ), safety stock quantities and maximum stock quantities of the respective parts according to the conventional method.

According to the inventory control method of the present embodiment, a standard deviation σ is calculated from the following equation (1) based on the difference between the actual received order quantity × in each unit period (for example, 1 month) and the average received order quantity μ when inventory control is to be exercised for component parts and accessory parts of automobiles:

$$\text{Standard deviation } \sigma = \{\Sigma(\times-\mu)^2/N\}^{1/2} \quad (1)$$

In the equation (1), N represents a population parameter (for example, the number of the unit periods).

Then, the standard deviation σ is added to the average received order quantity μ to control the maximum stock quantity. Actually, the standard deviation σ is multiplied by a factor (safety factor: a value which increases as the possibility for avoiding stock exhaustion increases) to determine a safety stock quantity, and the average received order quantity is added to the value of the safety stock quantity.

When the difference between the actual received order quantity x and the average received order quantity μ takes a negative value (in the month when the actual received order quantity × falls short of the average received order quantity μ), the standard deviation σ is determined, with the difference between the actual received order quantity x and the average received order quantity μ, i.e. (×-μ), being treated as zero. In this manner, the standard deviation σ is determined using only the value of the difference between the actual received order quantity × and the average received order quantity μ when the actual received order quantity × exceeds the average received order quantity μ. That is, the standard deviation σ is that excluding the variations in the negative direction (that taking into consideration only the degree of the variations in the positive direction relative to the average value).

FIG. 1 shows a concept of the actual received order quantities fluctuating irregularly, and FIG. 2 shows a concept of a normal distribution curve.

As shown in FIG. 1, the actual received order quantity × fluctuates irregularly. When the actual received order quantity × falls short of the average received order quantity μ, this negative difference constitutes a determinant resulting in an excessive safety stock quantity. Thus, when the actual received order quantity × exceeds the average received order quantity μ, this positive difference (including zero) is adopted, and other differences are taken to be zero, whereby the standard deviation σ is calculated.

As shown in FIG. 2, therefore, a normal distribution curve only in a positive direction is adopted, while a portion in a negative direction (a shaded area in the drawing) is excluded as a determinant making the safety stock quantity excessive.

Hence, the standard deviation is no more an excessive standard deviation including the degree of variations in the negative direction. Consequently, a safety stock quantity maintaining a minimum stock level appropriate enough to cause no stock exhaustion can be derived.

In the present embodiment, moreover, the standard deviation σ is determined using the average received order quantity µ calculated only from the actual received order quantities × taking positive values. In other words, in months when no order is received, this zero value is not included in the calculation of the average received order quantity µ, and the standard deviation σ is determined on this condition. Thus, even in the case of intermittent receiving of orders meaning the absence of orders in some months, the average of the actual received order quantities × is precisely applied, and the standard deviation σ leading to the safety stock quantity, which enables an appropriate stock level to be kept, can be determined properly.

In the present embodiment, furthermore, only the months (unit periods) when the actual received order quantities × take positive values, namely, the months when orders are actually received, are taken as the population parameter N.

Thus, even in the case of intermittent receiving of orders meaning the absence of orders in some months, the population parameter N, as the number of the months from whose order quantities the average received order quantity µ was calculated, is used, and the standard deviation σ, which serves as the basic value for the safety stock quantity enabling an appropriate stock level to be kept, can be determined even more properly.

Besides, the targeted number of months (the unit number of the unit periods) is itself used as the population parameter N to determine the standard deviation σ.

To determine a standard deviation for general sampling, N = n-1 is applied, with the number of samplings set at n and the population parameter set as N. To determine the standard deviation σ, which serves as the basic value for the safety stock quantity for inventory control of component parts and accessory parts of automobiles, however, the targeted number of months (the number n of samplings) is itself used as the population parameter N.

Based on FIGS. 3 to 5, an explanation will be offered for comparisons between the calculation of the safety stock quantity and maximum stock quantity based on the standard deviation σ determined by the method of the present embodiment and the calculation of the safety stock quantity and maximum stock quantity based on the standard deviation determined by the conventional method (standard deviation including the degree of variations in the negative direction).

FIG. 3 shows actual received order quantities in 6 months for 10 types of parts (Part 1 to Part 10). FIG. 4 shows the standard deviations σ, safety stock quantities and maximum stock quantities of the respective parts according to the method of the present embodiment. FIG. 5 shows the standard deviations (λ), safety stock quantities and maximum stock quantities of the respective parts according to the conventional method.

As shown in FIG. 3, the 10 types of parts are, for example, component parts and accessory parts of automobiles. For instance, 1 and 2 denote body parts, such as bumpers, 3 to 8 denote consumables (rubbers and filters), and 9 and 10 denote brake parts. The values of the actual received order quantities of the respective parts mean, for example, the figures achieved per month, and the achievements for the six months.

For example, Body Part 1 represents a part ordered every month in a small quantity. Brake Part 9 represents a part ordered in one of 3 months in a large quantity, and not ordered in the remaining two months. With these two types of parts taken as an example, a comparison will be made between the calculation of the safety stock quantities based on the standard deviations (λ) determined by the conventional method and the calculation of the safety stock quantities based on the standard deviations σ determined by the method of the present embodiment.

First, the conventional case will be explained.

As shown in FIGS. 3 and 5, the average received order quantity of Body Part 1 (the value obtained by dividing the total received order quantity by 6) is 20.00 pieces (the term "pieces" representing the number of the parts ordered will be hereinafter omitted), and the standard deviation (λ) including the degree of variations in the negative direction is 8.36. The standard deviation (λ) is multiplied by a factor, a, for ensuring a safety stock to obtain a safety stock quantity of Body Part 1 of 16.83. This value 16.83 is added to the average received order quantity of 20.00, followed by rounding up the results, to obtain a maximum stock quantity of 37.00.

The average received order quantity of Brake Part 9 (the value obtained by dividing the total received order quantity by 6) is 175.00, and the standard deviation (λ) including the degree of variations in the negative direction is 275.22. The standard deviation (λ) is multiplied by the factor, a, for ensuring a safety stock to obtain a safety stock quantity of Brake Part 9 of 539.43. This value 539.43 is added to the average received order quantity of 175.00, followed by rounding up the results, to obtain a maximum stock quantity of 715.00.

Next, the case of the present embodiment will be explained.

As shown in FIGS. 3 and 4, the average received order quantity of Body Part 1 (the value obtained by dividing the total received order quantity by 6, the number of the months when orders were actually received) is 20.00. For the months when the actual received order quantity fell short of the average received order quantity, the difference between the actual received order quantity and the average received order quantity, (×-µ), is treated as zero. The standard deviation σ determined on this condition is 5.00. The standard deviation σ is multiplied by the factor, a, for ensuring a safety stock to obtain a safety stock quantity of Body Part 1 of 9.80. This value 9.80 is added to the average received order quantity of 20, followed by rounding up the results, to obtain a maximum stock quantity of 30.00.

In the case of Body Part 1 ordered consecutively every month, therefore, the maximum stock quantity is 37.00 according to the conventional method, while it is 30.00 according to the present embodiment. Thus, the present embodiment can decrease the stock quantity by about 20%.

On the other hand, the average received order quantity of Brake Part 9 (the value obtained by dividing the total received order quantity by 2, the number of the months when orders were actually received) is 525. 00. For the month when the actual received order quantity fell short of the average received order quantity (i.e. the month when the actual received order quantity was 450) , the difference between the actual received order quantity and the average received order quantity, $(\times\text{-}\mu)$, is treated as zero. Moreover, only the number of the months when orders were actually received is taken as the population parameter N. The standard deviation $\sigma$ determined on these conditions is 53.03. The standard deviation $\sigma$ is multiplied by the factor, a, for ensuring a safety stock to obtain a safety stock quantity of Brake Part 9 of 103.93. This value 103.93 is added to the average received order quantity of 525.00, followed by rounding up the results, to obtain a maximum stock quantity of 629.

In the case of Brake Part 9 ordered intermittently, therefore, the maximum stock quantity is 715 . 00 according to the conventional method, while it is 629. 00 according to the present embodiment. Thus, the present embodiment can decrease the stock quantity by about 12%.

Stock quantity decreases of about 12% to 20% can be achieved for the other parts as well, although explanations for them are omitted herein. The factor, a, for ensuring safety stock takes a larger value for parts for which stock quantities with higher safety need to be ensured because of circumstances in places where inventory control is performed using the standard deviation $\sigma$. The factor, a, may be one taking a smaller value for parts whose stock exhaustion, if any, would exert minimal influence.

The calculation of the standard deviation, the safety stock quantity, the maximum stock quantity, etc. are performed by a computer. The result of the calculated maximum stock quantity is shown to a stock-manager person or order administrator, etc.

Thus, an inventory control method can be realized which can maintain a minimum appropriate stock enough to cause no stock exhaustion even when a standard deviation is used.

While the present invention has been described in the foregoing fashion, it is to be understood that the invention is not limited thereby, but may be varied in many other ways. For example, in the above-mentioned embodiment, the safety stock quantity is added to the average received order quantity to determine the maximum stock quantity. The average received order quantity used herein is intended to represent a predicted value of the received order quantity. Hence, the safety stock quantity may be added to a predicted received order quantity, which has been determined by other method, instead of the average received order quantity, whereby the maximum stock quantity may be obtained. Such variations are not to be regarded as a departure from the spirit and scope of the invention, and all such modifications as would be obvious to one skilled in the art are intended to be included within the scope of the appended claims.

**Claims**

1. An inventory control method which determines a standard deviation ($\sigma$) based on a difference between an actual received order quantity ($\times$) in each unit period and an average received order quantity ($\mu$), and controls a stock quantity by use of a safety stock quantity based on said standard deviation, **characterized in that**
   said standard deviation is determined using a value of said difference between said actual received order quantity and said average received order quantity only when said actual received order quantity exceeds said average received order quantity.

2. The inventory control method according to claim 1, **characterized in that** said standard deviation is determined using said average received order quantity calculated only from said actual received order quantities taking positive values.

3. The inventory control method according to claim 1 or 2, **characterized in that** said standard deviation is determined using said average received order quantity calculated only from said actual received order quantities taking positive values, and also using only said unit periods, when said actual received order quantities take positive values, as a population parameter (N).

4. The inventory control method according to any one of claims 1 to 3, **characterized in that** a number of said unit periods to be targeted is itself used as a population parameter for determining said standard deviation.

5. An inventory control method which determines a standard deviation based on a difference between an actual received order quantity in each unit period and an average received order quantity, and controls a stock quantity by use of a safety stock quantity based on said standard deviation, **characterized in that**
   said standard deviation is determined

using a value of said difference between said actual received order quantity and said average received order quantity only when said actual received order quantity exceeds said average received order quantity,

using said average received order quantity calculated only from said actual received order quantities taking positive values,

using only said unit periods, when said actual received order quantities take positive values, as a population parameter, and

using a number of said unit periods, to be targeted, itself as said population parameter.

6. The inventory control method according to any one of claims 1 to 5, **characterized in that** an article to be ordered is a component part of an automobile or an accessory part of an automobile.

# F I G. 1

(Q)

Correction to Received Order
Quantities Fluctuating Irregularly

AVE

Exclusion of Determinant
Making Maximum Stock
Quantity Excessively Large

(t)

# F I G. 2

Correction to Normal
Distribution Curve

Exclusion of Determinant
Making Maximum Stock
Quantity Excessively Large

(−)

(+)

# FIG.3

| | Actual Received Order Quantity | | | | | |
|---|---|---|---|---|---|---|
| | January | February | March | April | May | June |
| 1. Body Part | 25 | 25 | 20 | 10 | 10 | 30 |
| 2. Body Part | 10 | 5 | 10 | 0 | 60 | 5 |
| 3. Consumable | 800 | 500 | 0 | 200 | 0 | 400 |
| 4. Consumable (Rubbers) | 6000 | 0 | 4500 | 6000 | 0 | 3000 |
| 5. Consumable (Rubbers) | 100 | 0 | 0 | 0 | 80 | 60 |
| 6. Consumable (Filter) | 100 | 0 | 10 | 0 | 0 | 100 |
| 7. Consumable (Filter) | 1800 | 0 | 1800 | 0 | 0 | 300 |
| 8. Consumable (Filter) | 1000 | 900 | 0 | 0 | 1500 | 0 |
| 9. Brake Part | 600 | 0 | 0 | 450 | 0 | 0 |
| 10. Brake Part | 0 | 0 | 180 | 0 | 0 | 0 |

EP 1 403 801 A1

# F I G. 4

| | Average | σ | Safety Stock Quantity σ×a | Factor : a | Maximum Stock Quantity | |
|---|---|---|---|---|---|---|
| | | | | | | Rounded-Up |
| 1. Body Part | 20.00 | 5.00 | 9.80 | 1.96 | 29.80 | 30.00 |
| 2. Body Part | 7.20 | 1.77 | 3.46 | 1.96 | 10.66 | 11.00 |
| 3. Consumable | 475.00 | 162.98 | 319.44 | 1.96 | 794.44 | 795.00 |
| 4. Consumable (Rubbers) | 4875.00 | 795.49 | 1559.16 | 1.96 | 6434.16 | 6435.00 |
| 5. Consumable (Rubbers) | 80.00 | 11.54 | 22.61 | 1.96 | 102.61 | 103.00 |
| 6. Consumable (Filter) | 70.00 | 24.49 | 48.00 | 1.96 | 118.00 | 118.00 |
| 7. Consumable (Filter) | 1300.00 | 408.24 | 800.15 | 1.96 | 2100.15 | 2101.00 |
| 8. Consumable (Filter) | 1133.33 | 211.69 | 414.91 | 1.96 | 1548.24 | 1549.00 |
| 9. Brake Part | 525.00 | 53.03 | 103.93 | 1.96 | 628.93 | 629.00 |
| 10. Brake Part | 180.00 | 0.00 | 0.00 | 1.96 | 180.00 | 180.00 |

# F I G. 5

| | Average | $\lambda$ | Safety Stock Quantity $\sigma \times a$ | Factor : a | Maximum Stock Quantity | |
|---|---|---|---|---|---|---|
| | | | | | | Rounded-Up |
| 1. Body Part | 20.00 | 8.36 | 16.38 | 1.96 | 36.38 | 37.00 |
| 2. Body Part | 6.00 | 3.74 | 7.33 | 1.96 | 13.33 | 14.00 |
| 3. Consumable | 316.66 | 312.51 | 612.51 | 1.96 | 929.17 | 930.00 |
| 4. Consumable (Rubbers) | 3250.00 | 2752.27 | 5394.44 | 1.96 | 8644.44 | 8645.00 |
| 5. Consumable (Rubbers) | 40.00 | 45.60 | 89.37 | 1.96 | 129.37 | 130.00 |
| 6. Consumable (Filter) | 35.00 | 50.49 | 98.96 | 1.96 | 133.96 | 134.00 |
| 7. Consumable (Filter) | 650.00 | 898.33 | 1760.72 | 1.96 | 2410.72 | 2411.00 |
| 8. Consumable (Filter) | 566.66 | 653.19 | 1280.25 | 1.96 | 1846.91 | 1847.00 |
| 9. Brake Part | 175.00 | 275.22 | 539.43 | 1.96 | 714.43 | 715.00 |
| 10. Brake Part | 30.00 | 73.48 | 144.02 | 1.96 | 174.02 | 175.00 |

EP 1 403 801 A1

**European Patent Office**

**DECLARATION**

which under Rule 45 of the European Patent Convention EP 03 02 1164 shall be considered, for the purposes of subsequent proceedings, as the European search report

**Application Number**

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| Reason: | G06F17/60 |

The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-6.

The applicant's attention is drawn to the fact that a search may be carried out during examination following a declaration of no search under Rule 45 EPC, should the problems which led to the declaration being issued be overcome (see EPC Guideline C-VI, 8.5).
---
-----

| Place of search | Date | Examiner |
|---|---|---|
| THE HAGUE | 15 January 2004 | van der Weiden, A |

EPO FORM 1504 (P04C37)